Europäisches Patentamt

European Patent Office

Office européen des brevets

(19)

(11) Veröffentlichungsnummer: **0 509 142 A2**

## (12) EUROPÄISCHE PATENTANMELDUNG

(21) Anmeldenummer: **91120349.5**

(22) Anmeldetag: **28.11.91**

(51) Int. Cl.5: **H04N 5/91**

(30) Priorität: **19.04.91 DE 4112864**

(43) Veröffentlichungstag der Anmeldung:
**21.10.92 Patentblatt 92/43**

(84) Benannte Vertragsstaaten:
**AT BE CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**W-8510 Fürth/Bay.(DE)**

(72) Erfinder: **Koerber, Matthias, GRUNDIG E.M.V.**
**Max Grundig holl.Stiftung & Co KG,**
**Kurgartenstr.37**
**W-8510 Fuerth(DE)**

(54) **Videogerät für die Aufzeichnung und Wiedergabe von Videosignalen mit unterschiedlichen Vertikalfrequenzen.**

(57) Mit üblichen Videogeräten können nur Videosignale verarbeitet werden, die eine Vertikalfrequenz entsprechend einer der gebräuchlichen Fernsehnormen haben. Es sind auch Videogeräte bekannt, die Videosignale mit Vertikalfrequenzen verschiedener Fernsehnormen verarbeiten können.

Probleme treten jedoch für den Fall auf, daß Videosignale verarbeitet werden sollen, die eine von den Werten der Fernsehnormen abweichende Vertikalfrequenz aufweisen. Dies kann beispielsweise bei Videokameras der Fall sein.

Die vorliegende Erfindung ermöglicht die Verarbeitung von Videosignalen unterschiedlicher Vertikalfrequenzen, indem bei der Aufzeichnung der Videosignale eine Anpassung der Aufzeichnungseinheit an die Vertikalfrequenz des Videosignals erfolgt. Dadurch entsteht ein immer gleiches Aufzeichnungsspurbild auf dem Videomagnetband, so daß die Wiedergabe mit einem vorgegebenen Referenzsignal für die Vertikalfrequenz möglich ist.

FIGUR

Die Erfindung betrifft ein Videogerät für die Aufzeichnung und Wiedergabe von Videosignalen mit unterschiedlichen Vertikalfrequenzen.

Bei Videogeräten mit einer rotierenden Videomagnetkopfeinheit, bei welchen ein oder mehrere Videomagnetköpfe das Videomagnetband in Schrägspuren abtasten, legt die Rotationsgeschwindigkeit der Videomagnetkopfeinheit und die Transportgeschwindigkeit des Videomagnetbandes das Aufzeichnungsspurbild, d.h. den Winkel unter dem die Spuren auf dem Videomagnetband aufgezeichnet werden, fest. Die rotierende Videomagnetkopfeinheit ist Bestandteil der Kopftrommeleinheit, die außerdem ein feststehendes Kopftrommelteil und einen Antriebsmotor für die rotierende Videomagnetkopfeinheit aufweist. Über die zylinderförmige Außenwand der Videomagnetkopfeinheit und des feststehenden Kopftrommelteils wird ein Videomagnetband in einer Halbspirale hinwegtransportiert.

Die Videomagnetkopfeinheit enthält zwei um 180° versetzte Videomagnetköpfe, von denen jeder über eine halbe Umdrehung der Videomagnetkopfeinheit einer Schrägspur des Videomagnetbandes zugeordnet ist. Üblicherweise stellt eine Schrägspur ein Halbbild dar. Außerdem befinden sich auf der Videomagnetkopfeinheit Auslösemagnete für einen Lagengeber, der in bestimmten Winkellagen der Videomagnetkopfeinheit Positionssignale erzeugt und damit eine bestimmte Winkellage der Videomagnetköpfe kennzeichnet. Eine Transportsteuerschaltung regelt die vorgeschriebene Videomagnetbandgeschwindigkeit und beim Wiedergabebetrieb die Phasenlage des Videomagnetbandes so, daß die einzelnen Videomagnetköpfe der Videomagnetkopfeinheit die ihnen zugeordneten Schrägspuren auf dem Videomagnetband abtasten. Eine Steuerschaltung für die Videomagnetkopfeinheit regelt deren Rotationsgeschwindigkeit auf den für die Aufzeichnung und Wiedergabe erforderlichen Wert. Weiterhin ist eine Schaltung vorgesehen, die ein Umschaltsignal erzeugt, welches die Videomagnetköpfe in den erforderlichen Winkellagen der Videomagnetkopfeinheit umschaltet. Das Umschaltsignal wird von den Positionsimpulsen der Lagengebermagnete der Videomagnetkopfeinheit synchronisiert, so daß beim Eintritt des jeweiligen Videomagnetkopfs in das Videomagnetband, bzw. zu Beginn der Schrägspur, die Umschaltung der Videomagnetköpfe erfolgt. Dies geschieht beispielsweise durch die zeitliche Verzögerung der Umschaltimpulse gegenüber den Positionsimpulsen der Lagengebermagnete, da diese den Videomagnetköpfen bei der Rotation vorauseilen.

Normalerweise ist für Videogeräte die Aufzeichnung und Wiedergabe von Videosignalen mit einer bestimmten Vertikalfrequenz vorgesehen. Die Vertikalfrequenz gibt die Zahl der Voll- bzw. Halbbilder an, die pro Sekunde dargestellt werden. Die Vertikalfrequenz des Videosignals ist daher die bestimmende Größe für die Rotationsgeschwindigkeit bzw. Umdrehungszahl der Videomagnetkopfeinheit, da jeder Videomagnetkopf eine ein Halbbild darstellende Schrägspur aufzeichnet. Die Vertikalfrequenzen bei Videosignalen nach bekannten Fernsehnormen sind 59,94 Hz für die NTSC-Norm und 50,00 Hz für die Normen nach PAL und SECAM.

Es sind auch sogenannte Multinorm-Videogeräte bekannt, welche Videosignale der verschiedenen Fernsehnormen - und damit unterschiedliche Vertikalfrequenzen - verarbeiten können. Die DE-PS 32 43 889 zeigt ein solches Multinorm-Videogerät für die Wiedergabe von Videosignalen, welche mit unterschiedlichen Vertikalfrequenzen aufgezeichnet wurden. Dabei wird durch einen Detektor die Vertikalfrequenz des aufgezeichneten Videosignals ermittelt und sowohl einer Steuerschaltung für die Rotationsgeschwindigkeit der Videomagnetkopfeinheit, als auch einer Schaltung zur Erzeugung der Umschaltimpulse für die Videomagnetköpfe zur Verfügung gestellt.

Auch die in der DE-OS 29 51 172 beschriebene Magnetbandaufzeichnungs- und -wiedergabevorrichtung verwendet zur Einstellung der Bandtransportgeschwindigkeit für unterschiedliche Fernsehnormen ein Steuersignal, das von der Vertikalfrequenz des aufgezeichneten und wiederzugebenden Videosignals abhängig ist.

Bei den Videogeräten der oben genannten Art treten jedoch Probleme auf, wenn Videosignale mit einer von den Werten der Fernsehnormen abweichenden Vertikalfrequenz verarbeitet werden sollen, da das Aufzeichnungsspurbild der auf Videomagnetband aufgezeichneten Videosignale, bedingt durch die unterschiedlichen Vertikalfrequenzen uneinheitlich ist. Weiterhin werden die im Videogerät erzeugten Umschaltimpulse für die rotierenden Videomagnetköpfe nicht mehr zum richtigen Zeitpunkt zur Verfügung gestellt, weshalb die Videomagnetköpfe Videosignale mit von den Normwerten abweichender Vertikalfrequenz nicht korrekt verarbeiten können. Videosignale mit Abweichungen in der Vertikalfrequenz von den Normwerten, können beispielsweise von einer Videokamera stammen.

Aufgabe der Erfindung ist es daher, ein Videogerät dahingehend zu verbessern, daß die Aufzeichnung und Wiedergabe von Videosignalen mit unterschiedlichen und/oder mit von den Normwerten abweichenden Vertikalfrequenzen möglich ist.

Erfindungsgemäß wird die Aufgabe durch ein Videogerät mit den Merkmalen des Patentanspruchs 1 gelöst.

Der Vorteil der Erfindung liegt darin, daß auf überraschend einfache Weise und mit geringem schaltungstechnischem Aufwand, bei der Aufzeichnung von Videosignalen mit unterschiedlichen Vertikalfrequenzen immer das gleiche Aufzeichnungsspurbild auf dem Videomagnetband entsteht. Ein weiterer Vorteil der Erfindung ist die Erzeugung des Videomagnetkopfumschaltimpulses mittels digitalem Monoflop. Dadurch werden Fehlumschaltungen wegen unterschiedlicher Umdrehungszahl der Videomagnetkopfeinheit vermieden, gekoppelt mit den Vorzügen eines digitalen Abgleichs wie z.B. der Unempfindlichkeit gegenüber Temperaturschwankungen. Da das Aufzeichnungsspurbild der Videosignale unterschiedlicher Vertikalfrequenzen gleich ist, kann die Wiedergabe auf einfache Art und Weise mittels eines fest vorgegebenen Referenzsignals für die Vertikalfrequenz erfolgen.

Die Ausführungsform nach Patentanspruch 2 ermöglicht die Wiedergabe mit einer Referenzfrequenz für die Vertikalfrequenz, die der Vertikalfrequenz einer Fernsehnorm entspricht. Dies ist möglich, da das entstandene Aufzeichnungsspurbild dem Spurbild entspricht, das bei einer normgerechten Aufzeichnung entsteht. Daher kann das auf Videomagnetband aufgezeichnete Videosignal mit einem üblichen Videogerät wiederzugeben werden.

Der bei der Ausführungsform gemäß Patentanspruch 3 verwendete Mikroprozessor ermöglicht in Verbindung mit dem nichtflüchtigen Speicher die genaue Bestimmung der Videomagnetkopfumschaltimpulse für beliebige Vertikalfrequenzen. Dies wird durch einen einmaligen Abgleich für eine feste Vertikalfrequenz erreicht.

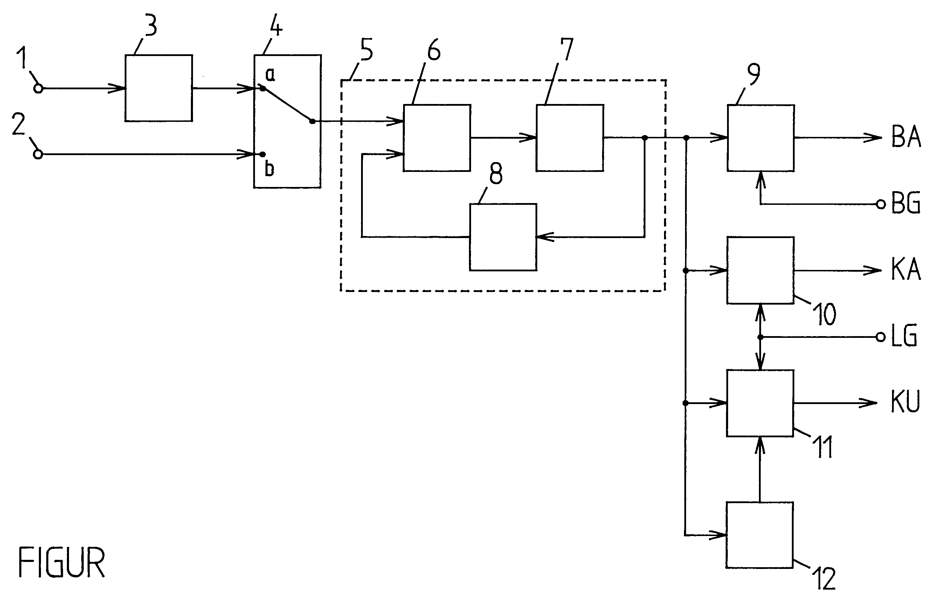

Die Erfindung wird im folgenden anhand einer in der Zeichnung dargestellten Ausführungsform näher beschrieben und erläutert.

Die Figur zeigt das Blockschaltbild einer Ausführungsform der Erfindung.

Im Aufzeichnungsfall liegt am Eingang 1 das aufzuzeichnende Videosignal an. In der Schaltung 3 werden die Vertikalsynchronisationssignale abgetrennt und über den Umschalter 4, welcher sich im Aufzeichnungsfall in Schaltstellung a befindet, einer Phasenregelschleife 5 zugeführt. Die Phasenregelschleife 5 besteht aus einer Phasenvergleichsschaltung 6, deren Ausgang mit einem spannungsgesteuerten Oszillator 7 verbunden ist. Das Ausgangssignal des Oszillators 7 ist über einen Teiler 8 auf den zweiten Eingang der Phasenvergleichsschaltung 6 rückgekoppelt. Dadurch entsteht ein in Frequenz und Phase vom Vertikalsynchronisationssignal abhängiges Regelsignal, welches an den Servoregelkreisen für Bandtransport 9 und Umdrehungszahl 10 der Videomagnetkopfeinheit, sowie am digitalen Monoflop 11 und der die Schaltzeit des Monoflops 11 einstellenden Regelschaltung 12 anliegt.

Die Umdrehungszahl der Videomagnetkopfeinheit wird über den Servoregler 10 so eingestellt, daß die Umdrehungszahl der Frequenz des Vertikalsynchronisationssignals entspricht. Bei einer Vertikalfrequenz von beispielsweise 52 Hz und zwei Videomagnetköpfen beträgt die eingestellte Umdrehungszahl 26 1/s. Die eingestellte Umdrehungszahl wird durch das Signal LG des Lagengebers kontrolliert, welches durch Magnete ausgelöst wird, die zu den Videomagnetköpfen um einen bestimmten Winkel versetzt auf der Videomagnetkopfeinheit angebracht sind und den Videomagnetköpfen bei der Drehung der Videomagnetkopfeinheit vorauseilen. Der die Videomagnetkopfeinheit antreibende Motor wird über den Anschluß KA des Servoregelkreises 10 betrieben. Die Bandtransportgeschwindigkeit wird dann vom Bandservoregelkreis 9 so eingestellt, daß sich auf dem Videomagnetband das gleiche Spurbild für das aufgezeichnete Videosignal ergibt, wie für den Fall der Aufzeichnung eines Videosignals mit einer Vertikalfrequenz entsprechend einer üblichen Fernsehnorm. Der Motor für den Bandtransport wird über den Anschluß BA betrieben und die tatsächliche Bandtransportgeschwindigkeit zu Regelzwecken ermittelt und an Anschluß BG zur Verfügung gestellt.

Da die Umschaltimpulse für die Videomagnetköpfe nach jedem Halbbild, d.h. abhängig von der Vertikalfrequenz des aufzuzeichnenden Videosignals und damit einer veränderten Umdrehungszahl der Videomagnetkopfeinheit, ausgelöst durch das Lagengebersignal LG erzeugt werden, ist es wegen der festen räumlichen Beziehung der Lagengebermagnete zu den Videomagnetköpfen auf der Videomagnetkopfeinheit nötig, veränderte Videomagnetkopfumschaltimpulse KU bereitzustellen, wofür ein digitales Monoflop 11 vorgesehen ist. Die Schaltzeit dieses Monoflops 11 wird durch die Regelschaltung 12 so eingestellt, daß der Videomagnetkopfumschaltimpuls KU zeltrichtig erzeugt wird. Die Regelschaltung 12 kann z.B. durch einen Mikroprozessor mit zugehörigem nichtflüchtigem Speicher realisiert werden. In den nichtflüchtigen Speicher wird die bei einem Abgleich ermittelte Schaltzeit für das digitale Monoflop 11 einer bestimmten Vertikalfrequenz eingespeichert. Bei diesem Abgleich wird beispielsweise eine einer der Fernsehnormen entsprechende Vertikalfrequenz verwendet, wobei die Videomagnetköpfe ein Videomagnetband mit vorgegebenem Aufzeichnungsspurbild abtasten und die Videomagnetkopfumschaltimpulse KU so eingestellt werden, daß das Aufzeichnungsspurbild bei der vorgegebenen Vertikalfrequenz ordnungsgemäß verarbeitet werden kann. Die dabei vom Mikroprozessor der Regelschaltung 12 ermittelte Schaltzeit für das digitale Monoflop 11 wird im nichtflüchtigen Speicher der Regelschaltung 12 abgespeichert. Diese Schaltzeit stellt einen Zahlenwert dar, da das digitale Monoflop mit Hilfe eines Synchronzählers realisiert ist. Liegt nun eine Abweichung von der eingestellten Vertikalfreqeunz vor, so ändert sich die Schaltzeit des digitalen Monoflops 11 proportional, da es mittels des von Phasenregelkreis 5 erzeugten, von der Vertikalfrequenz des aufzuzeichnenden Videosignals abhängigen Regelsignals getaktet wird. Bei einer Vertikalfrequenz die höher als die beim Abgleich verwendete Vertikalfrequenz ist, verringert sich die Schaltzeit daher entsprechend der Erhöhung der Vertikalfrequenz, da der eingestellte Zählerendstand aufgrund der erhöhten Taktung schneller erreicht wird.

Zur Wiedergabe der aufgezeichneten Videosignale kann ein fest vorgegebenes intern erzeugtes oder externes Referenzsignal für die Vertikalfrequenz an Anschluß 2 angelegt werden. Dieses Referenzsignal kann beispielsweise der Vertikalfrequenz der zur Aufzeichnung verwendeten Fernsehnorm entsprechen. Der Umschalter 4 befindet sich im Wiedergabefall in Schaltstellung b, und die Arbeitsweise der Servoregelkreise 9 und 10, sowie die Erzeugung der Videomagnetkopfumschaltimpulse KU erfolgt wie oben für den Aufzeichnungsfall beschrieben.

**Patentansprüche**

1. Videogerät für die Aufzeichnung und Wiedergabe von Videosignalen mit unterschiedlichen Vertikalfrequenzen, mit einer Schaltung (3) zum Abtrennen der Vertikalsynchronisationssignale von dem am Eingang (1) zur Aufzeichnung zugeführten Videosignal, mit einem Umschalter (4) für Aufzeichnung oder Wiedergabe, mit einer Phasenregelschleife (5) für die Erzeugung eines in Frequenz und Phase von den Vertikalsynchronisationssignalen abhängigen Regelsignals, mit Servoregelkreisen zur Steuerung der Videomagnetbandtransportgeschwindigkeit (9) und der Umdrehungszahl (10) der Videomagnetkopfeinheit, sowie mit einer Einrichtung (11, 12) zur Erzeugung von Umschaltimpulsen (KU) für mindestens zwei rotierende Videomagnetköpfe, welche durch Impulse (LG) von auf der Videomagnetkopfeinheit befindlichen Lagengebermagneten synchronisiert sind,
**dadurch gekennzeichnet,**
daß im Aufzeichnungsfall nach Maßgabe des von der Phasenregelschleife (5) erzeugten Regelsignals, welches von den Vertikalsynchronisationssignalen des aufzuzeichnenden Videosignals abhängt, die Transportgeschwindigkeit des Videomagnetbandes und die Umdrehungszahl der Videomagnetkopfeinheit über Servoregelkreise (9, 10) so eingestellt wird, daß sich bei der Aufzeichnung der Videosignale unterschiedlicher Vertikalfrequenz ein gleichbleibendes Aufzeichnungsspurbild auf dem Videomagnetband ergibt;
daß für die bei unterschiedlichen Vertikalfrequenzen auftretenden verschiedenen Umdrehungsgeschwindigkeiten der Videomagnetkopfeinheit die daraus resultierenden zeitlichen Abweichungen der Lagengeberimpulse (LG) mittels eines digitalen Monoflops (11), welches durch das von der Vertikalfrequenz abhängige Regelsignal getaktet wird, ausgeglichen werden, wodurch die Videomagnetkopfumschaltimpulse (KU) zeitlich korrekt erzeugt werden; und daß im Wiedergabefall über den Umschalter (4) eine feste Referenzfrequenz (2) an die Phasenregelschleife (5) angelegt wird.

2. Videogerät nach Anspruch 1,
**dadurch gekennzeichnet,**
daß die Referenzfrequenz (2) für den Wiedergabefall gleich der Vertikalfrequenz der Fernsehnorm ist, nach welcher die Aufzeichnung erfolgte, jedoch mit von der Fernsehnorm abweichender Vertikalfrequenz des aufgezeichneten und wiederzugebenden Videosignals.

3. Videogerät nach einem oder mehreren der vorhergehenden Patentansprüche,
**dadurch gekennzeichnet,**
daß die Regelschaltung (12) enthält:
   - einen Mikroprozessor zur Festlegung der Schaltzeiten des digitalen Monoflops (11) und
   - einen nichtflüchtigen Speicher, welcher die für eine bestimmte Vertikalfrequenz ermittelte Schaltzeit des digitalen Monoflops (11) enthält.

FIGUR